# EUROPÄISCHE PATENTANMELDUNG

(11) **EP 4 096 011 A2**
(43) Veröffentlichungstag der Anmeldung: **30.11.2022**
(21) Anmeldenummer: 22171473.6
(22) Anmeldetag: 03.05.2022
(51) Int. Cl.: H01M 50/503, H01M 50/516, H01M 50/509, H01M 50/213

(54) **STROMSCHIENE ZUM KONTAKTIEREN VON IN EINEM ZELLHALTER GEHALTENEN BATTERIEZELLEN, BATTERIEMODULANORDNUNG UND VERFAHREN ZUM VERBINDEN EINER STROMSCHIENE MIT EINER BATTERIEZELLE**

(30) Priorität: 25.05.2021 DE 102021113487
(71) Anmelder: Webasto SE, 82131 Stockdorf (DE)
(72) Erfinder: Stoll, Sebastian, 82131 Stockdorf (DE); Beyer, Hans, 82131 Stockdorf (DE); Böhringer, Volker, 82131 Stockdorf (DE)
(74) Vertreter: Nordmeyer, Philipp Werner

(57) **Zusammenfassung**

Die vorliegende Erfindung betrifft eine Stromschiene (1) zum Kontaktieren von in einem Zellhalter (2) gehaltenen, bevorzugt zylindrischen, Batteriezellen (3) zur Ausbildung eines Batteriemoduls (100) einer Hochvolt-Batterie, bevorzugt einer Traktionsbatterie für ein Fahrzeug, umfassend einen sich in einer Haupterstreckungsrichtung (7) erstreckender Grundkörper (4) und mindestens eine mit dem Grundkörper (4) einstückig ausgebildete Kontaktierungsanbindung (5, 5') zum Kontaktieren eines Zellkontaktes (6) einer der Batteriezellen (3), wobei die Kontaktierungsanbindung (5, 5') sich in einer Anbindungserstreckungsrichtung (8, 8') erstreckt, welche mit der Haupterstreckungsrichtung (7) einen Anbindungswinkel (a) zwischen 0° und kleiner 90° einschließt; sie betrifft ferner eine Batteriemodulanordnung (100) mit einer derartigen Stromschiene (1) und ein Verfahren zum Verbinden einer Stromschiene (1) mit einem Zellkontakt (6, 6').

## Beschreibung

### Technisches Gebiet

Die vorliegende Erfindung betrifft eine verbesserte Stromschiene zum Kontaktieren von in einem Zellhalter gehaltenen, beispielsweise zylindrischen, Batteriezellen zur Ausbildung eines Batteriemoduls einer Hochvolt-Batterie, etwa einer Traktionsbatterie für ein Fahrzeug, sowie eine entsprechende Batteriemodulanordnung zum Ausbilden einer Hochvolt-Batterie, etwa einer Traktionsbatterie für ein Fahrzeug, und ein Verfahren zum Verbinden einer Stromschiene mit einem Zellkontakt einer Batteriezelle in einer Batteriemodulanordnung.

### Stand der Technik

Aus dem Stand der Technik sind Hochvolt-Batterien bekannt, deren Batteriezellen mit Stromschienen, auch bekannt als Current Collectors oder Busbars, verbunden werden. Die Batterien werden auch als Akkumulatoren bezeichnet. Dabei handelt es sich in der Regel um elektrochemische Akkumulatoren, insbesondere um Lithium-Ionen-Akkumulatoren. Derartige Batterien sind üblicherweise nicht als Monoblock, sondern modular aus einer Vielzahl von Batteriezellen aufgebaut, die miteinander mechanisch und elektrisch verbunden sind. Für den Aufbau eines Batteriesystems in einem Elektrofahrzeug ist es entsprechend bekannt, Batteriezellen in Batteriemodulen anzuordnen und diese zu einer Batterie zusammenzubauen. Dies erhöht die Konfigurierbarkeit von Batterien und ermöglicht die Verwendung vergleichsweise kostengünstiger Standardbatteriezellen beim Aufbau von Batterien. Die Batteriezellen eines Batteriemoduls können durch einen Zellhalter gehalten werden. Dieser ist ein sich in einer Erstreckungsebene erstreckender Körper, der in der Regel aus einem nichtleitenden Material, wie Kunststoff, gefertigt ist, und welcher in aller Regel eine Vielzahl von in einem vorgegebenen Muster in Bezug auf die Erstreckungsebene angeordneten Aufnahmen zum Aufnehmen einer Batteriezelle umfasst.

Als Batteriezelle wird im Sinne der vorliegenden Offenbarung eine elektrochemische Speicherzelle, vorzugsweise eine Sekundärzelle verstanden. Der Begriff "Zelle" kann im Hinblick auf das physikalische Erscheinungsbild der Komponente als kleinste kontaktierbare Baueinheit verstanden werden. Demgegenüber wird unter einem Batteriemodul eine Baueinheit verstanden, welche eine Vielzahl von Batteriezellen zusammenfasst. Als Batterie wird entsprechend eine Baueinheit verstanden, die aus einem oder mehreren zusammengeschalteten Batteriemodulen aufgebaut ist. Derartige Batterien können ein die Batteriemodule aufnehmendes Gehäuse, elektrische Verschaltungen sowie ein Batteriemanagementsystem umfassen. Mehrere Batterien können zu einem Batteriesystem zusammengeschaltet werden, um beispielsweise eine erhöhte Kapazität des Batteriesystems bereit zu stellen.

Die Batterie oder das Batteriesystem sind vorzugsweise für den Einsatz in einem Elektrofahrzeug vorgesehen, können aber auch in anderen Fahrzeugen oder anderen Anwendungsbereichen eingesetzt werden.

Aus dem Stand der Technik ist es weiterhin bekannt, dass, sofern Stromschienen direkt mit Batteriezellen verschweißt werden, Stromschienen entsprechend vorgeformt sind, damit die für die Anbindung an die Zellen vorgesehenen Abschnitte der Stromschiene die Zellen berühren, um mit diesem verschweißt werden zu können. Das Vorformen ist ein zusätzlicher Fertigungsschritt. Denn nach einem Ausstanzen oder Freischneiden eines zweidimensionalen Vorformlings der Stromschiene aus einem Blech ist dieser Vorformling in einem weiteren Verformungsschritt, etwa einem Tiefzieh- bzw. Biegeschritt in eine dreidimensionale Form zu bringen.

Bei derartigen Stromschienen werden Kontaktierungsanbindungen in Form von Verästelungen, die sich von einem länglichen Grundkörper der Stromschiene dreidimensional weg erstrecken (sog. Tabs), meist mittels Ultraschall- oder Laserschweißen direkt an den zu kontaktierenden Zellkontakt der jeweiligen Batteriezelle angeschweißt. Herkömmlicherweise erstrecken sich diese Verästelungen senkrecht zur Haupterstreckungsrichtung des Grundkörpers der Stromschiene, welche in der Regel einer Hauptlastrichtung bzw. einem Hauptlastpfad entspricht und in welcher eine Mehrzahl von hintereinander angeordneten Batteriezellen via der Stromschiene parallel verschaltet sind. Bei zylindrischen Batteriezellen erstrecken sich die Verästelungen zur Kontaktierung des Pluspols der Batteriezellen in einem 90°-Winkel vom Grundkörper radial zum Zentrum der den Pluspol dort aufweisenden Stirnseite der zylindrischen Batteriezelle. Zur Kontaktierung des Minuspols verlaufen sie üblicherweise in einem 90°-Winkel vom Grundkörper tangential zum Bördelrand der den Minuspol dort aufweisenden Stirnseite der zylindrischen Batteriezelle.

Eine Batteriemodulanordnung mit einer herkömmlichen Stromschiene mit sich senkrecht von einem Grundkörper erstreckenden Kontaktierungsanbindungen kann beispielsweise der WO 2021 182 779 A1, der EP 3 800 702 A1 oder der EP 3 790 075 A1 entnommen werden. Die Materialausnutzung bei der Herstellung derartiger Stromschienen als Stanzteil oder Freischneideteil ist bei abzweigenden Kontaktierungsanbindungen im 90°-Winkel gering. Zudem ist bei einer hexagonalen Anordnung der Batteriezellen, auch Zellpackung genannt, welche beispielsweise bei zylindrischen Batteriezellen die beste Raumausnutzung bietet, der elektrische Verbindungsweg zwischen seriell verbundenen Batteriezellen vergleichsweise groß, so dass auch der Widerstand zwischen diesen unnötig groß ist. Umfasst eine zylindrische Batteriezelle einen Pol an ihrer Stirnseite im Bereich ihres Bördelrandes, erlaubt die elektrische Kontaktierung dieses Bördelrands über eine sich senkrecht vom Grundkörper erstreckende Kontaktierungsanbindung lediglich äußerst geringe Lagetoleranzen der Batteriezelle gegenüber der Haupterstreckungsrichtung, also in Richtung einer parallel verschalteten Reihe von Batteriezellen.

### Darstellung der Erfindung

Ausgehend von dem bekannten Stand der Technik ist es eine Aufgabe der vorliegenden Erfindung, eine verbesserte Stromschiene zum Kontaktieren von in einem Zellhalter gehaltenen, bevorzugt zylindrischen, Batteriezellen zur Ausbildung eines Batteriemoduls einer Hochvolt-Batterie, bevorzugt einer Traktionsbatterie für ein Fahrzeug, sowie eine entsprechende Batteriemodulanordnung zum Ausbilden einer Hochvolt-Batterie, bevorzugt einer Traktionsbatterie für ein Fahrzeug und ein Verfahren zum Verbinden einer Stromschiene mit einem Zellkontakt einer Batteriezelle bereitzustellen.

Die Aufgabe wird durch eine Stromschiene zum Kontaktieren von in einem Zellhalter gehaltenen, bevorzugt zylindrischen, Batteriezellen zur Ausbildung eines Batteriemoduls einer Hochvolt-Batterie, bevorzugt einer Traktionsbatterie für ein Fahrzeug, mit den Merkmalen des Anspruchs 1 gelöst. Vorteilhafte Weiterbildungen ergeben sich aus den Unteransprüchen, der Beschreibung und den Figuren.

Entsprechend wird eine Stromschiene zum Kontaktieren von in einem Zellhalter gehaltenen, bevorzugt zylindrischen, Batteriezellen zur Ausbildung eines Batteriemoduls einer Hochvolt-Batterie, bevorzugt einer Traktionsbatterie für ein Fahrzeug, vorgeschlagen, umfassend einen sich in einer Haupterstreckungsrichtung erstreckenden Grundkörper und mindestens eine mit dem Grundkörper einstückig ausgebildete Kontaktierungsanbindung zum Kontaktieren eines Zellkontaktes einer der Batteriezellen.

Ferner ist die Stromschiene derart ausgebildet, dass die Kontaktierungsanbindung sich in einer Anbindungserstreckungsrichtung erstreckt, welche mit der Haupterstreckungsrichtung einen Anbindungswinkel zwischen 0° und kleiner 90° einschließt, wobei die Stromschiene bevorzugt eine Mehrzahl von vorgenannten Kontaktierungsanbindungen aufweist.

Unter dem Begriff "Anbindungswinkel" wird der Winkel verstanden, welcher eingeschlossen ist von der Projektion der Anbindungserstreckungsrichtung und der Projektion der Haupterstreckungsrichtung auf eine Ebene, in welcher sich der Grundkörper erstreckt. Im Falle eines Grundkörpers aus beispielsweise einem (Metall-)Blech ist die Ebene definiert durch die zweidimensionale Erstreckung des Blechs/Grundkörpers, mithin senkrecht zur Dickenrichtung des Blechs/Grundkörpers.

Dadurch, dass die Kontaktierungsanbindung sich in einer Anbindungserstreckungsrichtung erstreckt, welche mit der Haupterstreckungsrichtung einen Anbindungswinkel zwischen 0° und kleiner 90° einschließt, kann eine besonders hohe Materialausnutzung bei der Herstellung der Stromschiene erzielt werden, insbesondere, wenn dieses als Stanzteil oder Freischneideteil aus einem (Metall-)Blech gestanzt bzw. geschnitten wird. Denn die Kontaktierungsanbindungen liegen dadurch räumlich eng am Grundkörper an, im Gegensatz zu herkömmlichen, zum Stand der Technik beschriebenen Stromschienen mit sich senkrecht zur Haupterstreckungsrichtung erstreckenden Kontaktierungsanbindungen.

Insbesondere bei einer eine besonders hohe Raumausnutzung ermöglichenden hexagonalen Anordnung von vorzugsweise zylindrischen Batteriezellen in einem Batteriemodul kann ferner der elektrische Verbindungsweg zwischen zwei durch die Stromschiene seriell verbundenen Batteriezellen besonders kurz, gar so kurz wie möglich gehalten werden und demgemäß der elektrische Widerstand damit besonders klein, gar so gering wie möglich gehalten werden.

Ferner erlaubt die derartige Ausbildung der Stromschiene eine Minimierung der Abdeckung der Oberseite der Batteriezellen durch Zellhalter und Stromschiene, so dass ein besonders effektives, gar ein im Wesentlichen nicht durch die Stromschiene gehindertes Entlüften bzw. "Venting" der Batteriezelle(n) im Fehlerfall ermöglicht ist.

Ist die Kontaktierungsanbindung zur Kontaktierung eines im Bereich des Umfangs einer Stirnseite einer zylinderförmigen Batteriezelle, mithin an deren Bördelrand, angeordneten Zellkontaktes, welcher beispielsweise als Minus-Pol der Batteriezelle ausgebildet sein kann, vorgesehen, kann eine hohe Lagetoleranz in Bezug auf die Lage der Stromschiene und damit der Kontaktierungsanbindung einerseits und der Batteriezelle andererseits in Haupterstreckungsrichtung erzielt werden. Ist die Haupterstreckungsrichtung in Richtung einer Parallelverschaltung von Batteriezellen angeordnet, ermöglicht dies entsprechend größere Lagetoleranzen der in Haupterstreckungsrichtung parallel verschalteten Batteriezellen, und damit beispielsweise aufgrund von Fertigungstoleranzen des Zellhalters variierende Abstände zwischen den Batteriezellen in Haupterstreckungsrichtung. Da zwischen parallel verschalteten Batteriezellen keine Potentialdifferenz besteht, sind generell höhere Toleranzen in dieser Raumrichtung möglich als bei Batteriezellen mit wechselnder Potentialdifferenz bzw. seriell verschalteten Batteriezellen. Durch die Ausbildung der Kontaktierungsanbindung mit dem Anbindungswinkel können entsprechend im Vergleich zu herkömmlichen Stromschienen mit senkrecht abzweigenden Kontaktierungsanbindungen die vorgenannten erlaubten Toleranzen in Richtung Parallelverschaltung besser ausgenutzt werden. Die erfindungsgemäße Stromschiene erlaubt mithin eine einfachere und robustere (Serien-) Fertigung, einen einfacheren Aufbau und einen geringeren Materialeinsatz hinsichtlich der Stromschiene selbst als auch insbesondere des Zellhalters und der Batteriemodulanordnung.

Aus einer damit etwaige einhergehenden vergleichsweise geringen Lagetoleranz in Richtung der Serienverschaltung von Batteriezellen durch die Stromschiene quer zur Haupterstreckungsrichtung ergibt sich kein Nachteil, da hier ohnehin konstruktiv eine enge Toleranz zur Einhaltung der Luft- und Kriechstrecken vorzusehen ist.

Vorzugsweise ist die Anbindungserstreckungsrichtung derart orientiert bzw. erstreckt sich die sich in der Anbindungserstreckungsrichtung erstreckende Kontaktierungsanbindung derart, dass eine Kontaktierung des durch diese Kontaktierungsanbindung zu kontaktierenden Zellkontakts tangential zu einer Mittelachse der den Zellkontakt aufweisenden Batteriezelle erreicht ist. So kann eine vergleichsweise große mögliche Lagetoleranz bezüglich der Stromschiene gegenüber den zu kontaktierenden Batteriezellen sowie zwischen den Batteriezellen relativ zueinander bereitgestellt werden.

Die Haupterstreckungsrichtung ist vorzugsweise in Hauptlastrichtung orientiert, also in Richtung einer Parallelverschaltung einer Mehrzahl von Batteriezellen.

Der Grundkörper weist in seiner Haupterstreckungsrichtung eine Länge auf, die um ein Vielfaches größer ist als dessen Breite quer zur Haupterstreckungsrichtung. Mit anderen Worten kann der Grundköper als Band oder Bahn ausgebildet sein. Daraus ergibt sich die längliche "Schienenform" der Stromschiene.

Gemäß einer weiteren bevorzugten Ausführungsform ist der Anbindungswinkel α kleiner 45°, bevorzugt kleiner 40°, besonders bevorzugt kleiner 35°, besonders bevorzugt kleiner 30° ist, wobei der Anbindungswinkel bevorzugt 25°, 20°, 15°, 10°, 5° oder 0° ist. Je geringer der Anbindungswinkel, desto größer sind die zur Verfügung stehenden Lagetoleranzen in Haupterstreckungsrichtung. Zudem steigt mit abnehmenden Anbindungswinkel der potentielle Grad der Materialausnutzung, beispielsweise, wenn die Stromschiene aus einem Blech geschert/geschnitten wird. Ferner kann die Länge eines zwischen zwei seriell verschalteten Batteriezellen via der Stromschiene bereitgestellten Strompfades umso kleiner ausgebildet werden, desto geringer der Anbindungswinkel ist. Mit zunehmenden Anbindungswinkel kann der Abstand zweier Reihen von Batteriezellen quer zur Haupterstreckungsrichtung größer sein, und/oder die Breite des Grundkörpers kleiner ausgebildet sein, so dass sich Material hinsichtlich der Stromschiene selbst sparen lässt. Aus mannigfaltigen Versuchen hat sich überraschenderweise herausgestellt, dass besonders günstige Kombinationen der vorstehenden Vorteile in einem Anstellwinkelbereich von 0° bis 45°, insbesondere bei 0° und 25°, erzielt werden können.

Es hat sich als vorteilhaft herausgestellt, wenn die Kontaktierungsanbindung sich in Form einer Lasche in der Anbindungserstreckungsrichtung in Bezug auf die Haupterstreckungsrichtung seitlich vom Grundkörper erstreckt. Mit anderen Worten ist die mindestens eine Kontaktierungsanbindung bezogen auf die Haupterstreckungsrichtung seitlich am Grundkörper vorgesehen.

Gemäß einer weiteren bevorzugten Ausführungsform umfasst die Stromschiene zumindest eine erste Kontaktierungsanbindung zum Kontaktieren eines Zellkontaktes einer ersten Polarität einer ersten Batteriezelle und zumindest eine zweite Kontaktierungsanbindung zum Kontaktieren eines Zellkontaktes der zweiten Polarität einer zweiten Batteriezelle. Vorzugsweise umfasst die Stromschiene eine Mehrzahl von ersten und/oder zweiten Kontaktierungsanbindungen.

Bezogen auf die Haupterstreckungsrichtung ist die zumindest eine erste Kontaktierungsanbindung auf einer ersten Seite des Grundkörpers angeordnet und ist die zumindest eine zweite Kontaktierungsanbindung auf einer zweiten Seite des Grundkörpers angeordnet.

Es hat sich als vorteilhaft herausgestellt, wenn die erste Kontaktierungsanbindung ausgebildet ist, einen an einer Stirnseite einer Batteriezelle zentral angeordneten Zellkontakt erster Polarität zu kontaktieren und/oder wenn die zweite Kontaktierungsanbindung ausgebildet ist, einen an einer weiteren Batteriezelle an deren Stirnseite im Umfangsbereich angeordneten Zellkontakt zweiter Polarität zu kontaktieren.

Gemäß einer weiteren bevorzugten Ausführungsform erstreckt sich die erste Kontaktierungsanbindung bezogen auf die Haupterstreckungsrichtung in einem ersten Richtungssinn vom Grundkörper und erstreckt sich die zweite Kontaktierungsanbindung bezogen auf die Haupterstreckungsrichtung in einem dem erste Richtungssinn entgegen orientierten zweiten Richtungssinn vom Grundkörper.

Der Ausdruck "auf die Haupterstreckungsrichtung bezogener Richtungssinn" bedeutet hierbei, dass dieser Richtungssinn zumindest eine Komponente umfasst, die in Haupterstreckungsrichtung verläuft. Der Richtungssinn entspricht einem Vektor, beginnend am Ansatz bzw. Fuß oder Wurzelabschnitt der Kontaktierungsanbindung am Grundkörper und erstreckt sich in Richtung des freien Endes dieser Kontaktierungsanbindung. Mit anderen Worten kann der Richtungssinn bestimmt werden als die Komponente der Anbindungserstreckungsrichtung, welche parallel zur Haupterstreckungsrichtung ist. Insbesondere bei einer hexagonalen Anordnung der Batteriezellen im Zellhalter bzw. Batteriemodul kann so ein besonders kurzer Strompfad zwischen zwei seriell verschalteten Batteriezellen erzielt werden.

Gemäß einer weiteren bevorzugten Ausführungsform erstreckt sich bezogen auf eine zur Haupterstreckungsrichtung senkrecht angeordnete Querrichtung die erste Kontaktierungsanbindung in einem ersten Richtungssinn vom Grundkörper und die zweite Kontaktierungsanbindung in zweiten, dem erste Richtungssinn entgegen orientierten Richtungssinn vom Grundkörper. So kann der Grundkörper mit einer vergleichsweise geringen Breite ausgebildet und somit der Materialbedarf für die Stromschiene vergleichsweise gering sein.

Gemäß einer weiteren bevorzugten Ausführungsform sind ein Wurzelabschnitt der ersten Kontaktierungsanbindung, von welchem aus sich die erste Kontaktierungsanbindung vom Grundkörper erstreckt, und ein Wurzelabschnitt der zweiten Kontaktierungsanbindung, von welchem aus sich die zweite Kontaktierungsanbindung vom Grundkörper erstreckt, bezogen auf die Haupterstreckungsrichtung im Wesentlichen auf der gleichen Höhe angeordnet. So kann ein besonders kurzer Strompfad zwischen zwei mittels der Stromschiene seriell verschalteten Batteriezellen erzielt werden.

"Im Wesentlichen auf gleicher Höhe" ist hierzu definiert als innerhalb vorgegebener Toleranzen liegend, innerhalb welchen der Versatz der Wurzelabschnitte, genauer von der Mitten, in Haupterstreckungsrichtung kleiner gleich der Breite der Laschen quer zu deren Anbindungserstreckungsrichtung sind.

Gemäß einer weiteren bevorzugten Ausführungsform sind in einem Zustand vor der Kontaktierung der zu kontaktierenden Zellkontakte der Grundkörper und die Kontaktierungsanbindungen als einstückiges, also integrales, zweidimensionales Blechteil ausgebildet. Vorzugsweise stellt die Stromschiene vor dem Kontaktieren der zu kontaktierenden Zellkontakte ein zweidimensionales Blechteil dar.

Gemäß einer weiteren bevorzugten Ausführungsform weist die zumindest eine Kontaktierungsanbindung einen Kontaktierungsabschnitt zum Kontaktieren eines Zellkontaktes und jeweils einen Verformungsabschnitt auf, via welchem bei einem Herabdrücken des Kontaktierungsabschnitts in einer Dickenrichtung des Grundkörpers von Höhenniveau des Grundkörpers aus auf ein davon unterschiedliches Höhenniveau des zu kontaktierenden Zellkontaktes zum Kontaktieren des Zellkontaktes eine Verformung, bevorzugt eine elastische und/oder plastische Verformung, vorzugsweise ein Biegung umfassend, aufnehmbar ist. So kann die Stromschiene als zweidimensionales Blechteil ausgebildet sein, wobei ein Verformen der zumindest einen Kontaktierungsanbindung zum Herstellen eines physischen Berührens mit dem zu kontaktierenden Zellkontakt und das Kontaktieren im Sinne der Ausbildung einer dauerhaften, elektrisch leitenden Verbindung zwischen Kontaktierungsanbindung und Zellkontakt in einem Arbeitsschritt erfolgen kann.

Gemäß einer weiteren bevorzugten Ausführungsform umfasst der Grundkörper zwischen zwei Anbindungsbereichen, von welchen sich jeweils zumindest eine Kontaktierungsanbindung erstreckt, eine S-Schlag-förmigen Übergangsabschnitt, wobei bevorzugt die Anbindungsbereiche jeweils eine vorgegebene Breite quer zur Haupterstreckungsrichtung aufweisen und der Übergangsabschnitt eine Breite quer zur aufweist, die kleiner ist als die Breite der Anbindungsbereiche, wobei bevorzugt der Übergangsabschnitt eine Länge in Haupterstreckungsrichtung aufweist, die größer ist als die Länge zweier Kontaktierungsanbindungen in Haupterstreckungsrichtung. So kann die Stromschiene besonders materialsparend ausgebildet sein. Denn durch den S-Schlag umfasst der Grundkörper von Material ausgesparte Bereiche, in welchen sich jeweils eine Kontaktierungsanbindung im ihrem jeweiligen Anbindungswinkel, vorzugsweise 0° zum Kontaktieren eines Zellkontaktes im Umfangsbereich oder 25° zum Kontaktieren eines zentral angeordneten Zellkontaktes, erstrecken kann, ohne die Gesamtbreite der Stromschiene signifikant zu vergrößern.

Vorzugsweise umfasst ein Anbindungsbereich jeweils eine erste und zweite Kontaktierungsanbindung.

Die oben gestellte Aufgabe wird weiterhin durch eine Batteriemodulanordnung zum Ausbilden einer Hochvolt-Batterie, bevorzugt einer Traktionsbatterie für ein Fahrzeug, mit den Merkmalen des Anspruchs 10 gelöst. Vorteilhafte Weiterbildungen ergeben sich aus der vorliegenden Beschreibung und den Figuren.

Entsprechend wird eine Batteriemodulanordnung zum Ausbilden einer Hochvolt-Batterie, bevorzugt einer Traktionsbatterie für ein Fahrzeug, vorgeschlagen, umfassend einen Zellhalter, eine Vielzahl von im Zellhalter gehaltenen Batteriezellen und eine Stromschiene gemäß einer der vorstehenden Ausführungsformen.

Durch die Batteriemodulanordnung können die hinsichtlich der Stromschiene beschriebenen Vorteile und Wirkungen in analoger Weise erzielt werden, weshalb hier auf eine erneute Beschreibung derselben verzichtet wird, um Redundanzen zu vermeiden.

Die oben gestellte Aufgabe wird weiterhin durch ein Verfahren zum Verbinden einer Stromschiene mit einem Zellkontakt einer Batteriezelle in einer Batteriemodulanordnung mit den Merkmalen des Anspruchs 11 gelöst. Vorteilhafte Weiterbildungen des Verfahrens ergeben sich aus den Unteransprüchen sowie der vorliegenden Beschreibung und den Figuren.

Entsprechend wird ein Verfahren zum Verbinden einer Stromschiene mit einem Zellkontakt einer Batteriezelle vorgeschlagen, umfassend das Zusammenführen eines Zellhalters zum Halten von Batteriezellen in einem Batteriemodul mit einer Stromschiene gemäß einem der vorstehenden Ausführungsformen, das Niederhalten der Stromschiene mit mindestens einem Niederhalter, das Andrücken einer Kontaktierungsanbindung der Stromschiene zum Kontaktieren einer im Zellhalter gehaltenen Batteriezelle, und das Verschweißen der Kontaktierungsanbindung mit der Batteriezelle.

Durch das Verfahren werden in analoger Weise die hinsichtlich der Stromschiene beschriebenen Vorteile und Wirkungen erzielt.

Insbesondere ermöglicht es das Verfahren, bevorzugt in Verbindung mit einer entsprechend ausgebildeten Stützgeometrie am Zellhalter ein Herunterbiegen der Kontaktierungsanbindung(en) bis zur Kontaktfläche des jeweils zu kontaktierenden Zellkontaktes im gleichen Prozessschritt mit der elektrischen Kontaktierung, vorzugsweise durch Laser- oder Ultraschallschweißen, durchzuführen.

Durch die Fertigung der Stromschiene als rein zweidimensionales Stanzteil oder Freischneideteil, anstelle eines als dreidimensional geformtes Stanz-Biege-Teil, wie bei herkömmlichen Verfahren vorgesehen, kann die Herstellung, das Handling und vor allem die Platzierung der Stromschiene auf dem Zellhalter und die diesbezüglich einzuhaltenden Toleranzen ohne eine versehentliche elektrische Kontaktierung der Zellen vor dem eigentlichen Schweißprozess ermöglicht werden.

Gemäß einer weiteren bevorzugten Ausführungsform wird beim Schritt des Andrückens ein Kontaktierungsabschnitt der Kontaktierungsanbindung aus einer durch den Grundkörper der Stromschiene definierten Ebene auf den zu kontaktierenden Zellkontakt der Batteriezelle gedrückt, wobei bevorzugt ein Verformungsabschnitt der Kontaktierungsanbindung eine elastische und/oder plastische Verformung erfährt.

Gemäß einer weiteren bevorzugten Ausführungsform erfolgt das Andrücken der Kontaktierungsanbindung auf eine Batteriezelle mittels eines Schweißkopfes, der ebenso für die unmittelbar folgende Verschweißung von Kontaktierungsanbindung und Zellkontakt verwendet wird.

Mit anderen Worten erfolgt sowohl das Herunterdrücken bzw. Andrücken, vorzugweise unter Verformen der Kontaktierungsanbindung, bevorzugt deren Verformungsabschnitts, aus der durch den Grundkörper definierten Ebene, auf den Zellkontakt der zu kontaktierenden Batteriezelle in einem Schritt mit dem Verschweißen von Kontaktierungsanbindung und Zellkontakt durch ein einzelnes, hierzu ausgebildetes Werkzeug. Der Schweißkopf ist mithin ausgebildet zum Andrücken der Kontaktierungsanbindung an und zum Verscheißen der Kontaktierungsanbindung mit dem Zellkontakt.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht auf eine Batteriemodulanordnung zum Ausbilden einer Hochvolt-Traktionsbatterie eines Fahrzeuges;
- Figur 2: schematisch eine Detailansicht der Draufsicht aus Figur 1;
- Figur 3: schematisch eine perspektivische Seitenansicht der Batteriemodulanordnung gemäß der Figuren 1 und 2 während deren Herstellung;
- Figur 4: schematisch eine perspektivische Seitenansicht der Batteriemodulanordnung gemäß der Figuren 1 bis 3 während deren Herstellung; und
- Figur 5: schematisch eine weitere perspektivische Seitenansicht der Batteriemodulanordnung aus Figur 4.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

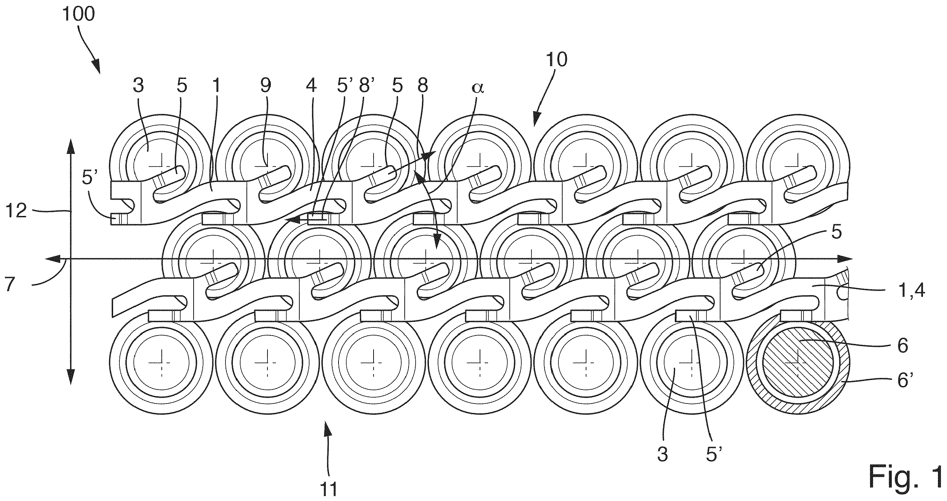

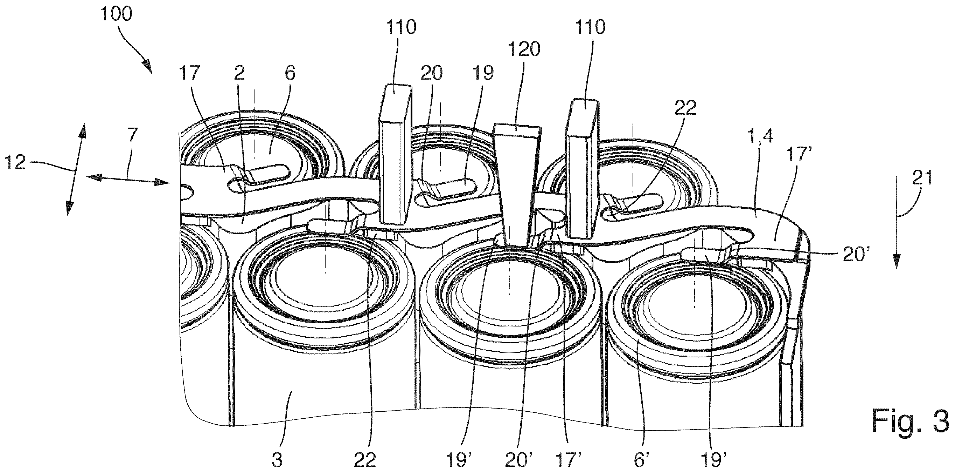

In Figur 1 ist schematisch eine Draufsicht auf eine Batteriemodulanordnung 100 zum Ausbilden einer Hochvolt-Traktionsbatterie eines Fahrzeuges gezeigt. Sie umfasst einen hier aus Übersichtlichkeitsgründen nicht gezeigten Zellhalter (siehe Figuren 3 bis 5, dort Bezugszeichen 2), welcher eine Vielzahl von Aufnahmen aufweist, in denen jeweils eine zylindrische Batteriezelle 3 aufgenommen ist. Die Aufnahmen des Zellhalters 2 sind derart angeordnet, dass senkrecht zu den (Längs-)Mittelachsen 9 der Batteriezellen 3 diese in einem hexagonalen Muster angeordnet sind. Sie stellen mithin eine hexagonale Zellpackung dar.

Die Batteriemodulanordnung 100 umfasst ferner mehrere parallel verlaufende Stromschienen 1, die ausgebildet sind zum Kontaktieren einer Mehrzahl der im Zellhalter 2 gehaltenen Batteriezellen 3.

Die Stromschiene 1 umfasst einen sich in einer Haupterstreckungsrichtung 7 erstreckenden Grundkörper 4 und eine Mehrzahl von mit dem Grundkörper 4 einstückig ausgebildeten Kontaktierungsanbindungen 5, 5' zum Kontaktieren jeweils eines Zellkontaktes 6, 6' jeweils einer de Batteriezelle 3.

Die Haupterstreckungsrichtung 7 entspricht einer Richtung, in welcher hintereinander in einer Reihe Batteriezellen angeordnet sind. Durch die Stromschiene 1 sind diese parallel verschaltet, wie im Folgenden näher erläutert.

Die Kontaktierungsanbindungen 5, 5' teilen sich auf in eine Mehrzahl von ersten Kontaktierungsanbindungen 5 zum Kontaktieren jeweils eines Zellkontaktes 6 einer ersten Polarität jeweils einer Batteriezelle 3, hier den an der in der Draufsicht aus Figur 1 sichtbaren Stirnseite der jeweiligen Batteriezelle 3 zentral angeordneten Pluspol-Zellkontakt 6, und in eine Mehrzahl von zweiten Kontaktierungsanbindungen 5' zum Kontaktieren eines Zellkontaktes 6' der zweiten Polarität jeweils einer Batteriezelle 3, hier den an der Stirnseite der jeweiligen Batteriezelle 3 im Umfangsbereich angeordneten Minuspol-Zellkontakt 6'.

Wie aus Figur 1 zu entnehmen, sind bezogen auf die Haupterstreckungsrichtung 7 die ersten Kontaktierungsanbindungen 5 auf einer ersten Seite 10 des Grundkörpers 4 seitlich am Grundkörper 4 angeordnet und die zweiten Kontaktierungsanbindungen 5' auf der anderen (zweiten) Seite 11 des Grundkörpers 4 seitlich am Grundkörper 4 angeordnet.

Entsprechend entspricht die Haupterstreckungsrichtung 7 der Hauptlastrichtung, also der Richtung einer Parallelverschaltung einer Mehrzahl von Batteriezellen 3. Anders ausgedrückt sind in Haupterstreckungsrichtung 7 auf der ersten Seite 10 des Grundkörpers 4 durch die ersten Kontaktierungsanbindungen 5 eine Mehrzahl von in Haupterstreckungsrichtung 7 angeordneten Batteriezellen 3 durch Kontaktierung von jeweils deren Pluspol-Zellkontakt 6 elektrisch parallel verschaltet, und auf der zweiten Seite 11 durch die zweiten Kontaktierungsanbindungen 5' eine weitere Mehrzahl von in Haupterstreckungsrichtung 7 angeordneten Batteriezellen 3 durch Kontaktierung jeweils von deren Minuspol-Zellkontakt 6' elektrisch parallel verschaltet.

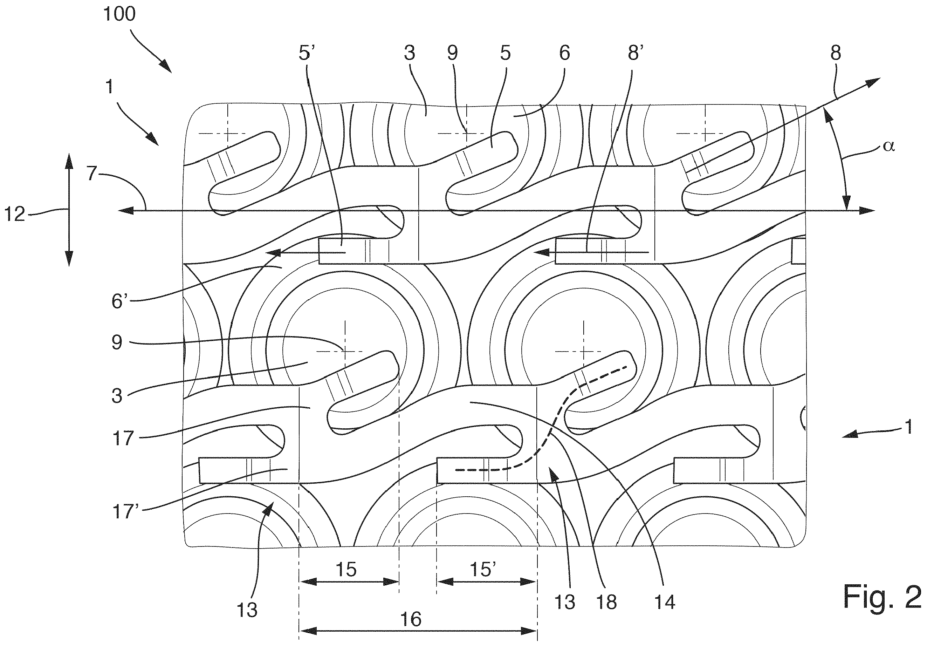

In einer senkrecht zur Haupterstreckungsrichtung 7 orientierten Querrichtung 12 sind durch jeweils eine erste Kontaktierungsanbindung 5 und eine zweite Kontaktierungsanbindung 5' jeweils zwei Batteriezellen 3 elektrisch seriell verschaltet, wie in Bezug zu Figur 2 näher erläutert.

Die Kontaktierungsanbindungen 5, 5' erstrecken sich jeweils in einer Anbindungserstreckungsrichtung 8, 8', welche mit der Haupterstreckungsrichtung 7 einen Anbindungswinkel α zwischen 0° und kleiner 90° einschließt.

Vorliegend weisen die ersten Kontaktierungsanbindungen 5 eine Anbindungserstreckungsrichtung 8 auf, die in einem Anbindungswinkel α von 25° relativ zur Haupterstreckungsrichtung 7 orientiert ist. Ferner weisen die zweiten Kontaktierungsanbindungen eine Anbindungserstreckungsrichtung 8' auf, welche parallel zur Haupterstreckungsrichtung 7, mithin mit einem Anbindungswinkel von 0°, orientiert ist.

Die Anbindungswinkel α der ersten und zweiten Kontaktierungsanbindungen 5, 5' sind mithin unterschiedlich. Alternativ können sie auch den gleichen Anbindungswinkel α aufweisen.

In Figur 2 ist schematisch eine Detailansicht der Draufsicht aus Figur 1 gezeigt. Wie hinsichtlich der in Figur 2 oben rechts im Bild eingezeichneten Anbindungserstreckungsrichtungen 8, 8' zu entnehmen, erstrecken sich die ersten Kontaktierungsanbindungen 5 bzw. deren Anbindungserstreckungsrichtung 8 bezogen auf die Haupterstreckungsrichtung 7 in einem ersten Richtungssinn vom Grundkörper 4. Ferner erstrecken sich die zweiten Kontaktierungsanbindungen 5' bezogen auf die Haupterstreckungsrichtung 7 bzw. deren Anbindungserstreckungsrichtungen 8' in einem dem erste Richtungssinn entgegen orientierten zweiten Richtungssinn vom Grundkörper 4.

Der Grundkörper 4 jeder Stromschiene 1 kann als im Wesentlichen in zwei sich alternierend in Haupterstreckungsrichtung 7 abwechselnde Bereiche bzw. Abschnitte, nämlich einen Anbindungsbereich 13 und einen Übergangsabschnitt 14, unterteilt angesehen werden. Zwischen zwei Anbindungsbereichen 13, von welchen sich jeweils eine erste Kontaktierungsanbindung 5 und eine zweite Kontaktierungsanbindung 5' erstrecken, ist jeweils ein S-Schlag-förmiger Übergangsabschnitt 14 angeordnet. Die Anbindungsbereiche 13 weisen eine vorgegebene Breite quer zur Haupterstreckungsrichtung 7 (also in Querrichtung 12) auf. Die Übergangsabschnitte 14 weisen ferner eine Breite quer zur Haupterstreckungsrichtung 7 auf, die kleiner ist als die Breite der Anbindungsbereiche 13. Vorliegend ist eine Länge 16 der Übergangsagschnitte 14 in Haupterstreckungsrichtung 7 größer ist als die Summe der Länge 15 der ersten Kontaktierungsanbindung 5 und der Länge 15' der zweiten Kontaktierungsanbindung 5' in Haupterstreckungsrichtung 7.

Folglich weist die Stromschiene 1 bzw. deren Grundkörper 4 materialfreie Aufnahmebereiche auf, in welchem sich jeweils eine Kontaktierungsanbindung 5, 5' erstrecken kann.

Die Kontaktierungsabschnitte 5, 5' sind in Form einer Lasche ausgebildet. Sie erstrecken sich ausgehend von einem Wurzelabschnitt 17, 17', mit welchem sie an den Grundkörper 4 einstückig angeschlossen sind, in Richtung von deren Anbindungserstreckungsrichtung 8, 8'. In Bezug auf einen Anbindungsbereich 13 sind die Wurzelabschnitte 17, 17' des sich dort erstreckenden Paares aus erster und zweiter Kontaktierungsanbindung 5, 5' in Bezug auf die Haupterstreckungsrichtung 7 im Wesentlichen auf derselben Höhe angeordnet. So ergibt sich ein besonders kurzer Strompfad 18 zwischen zwei seriell verschalteten Batteriezellen 3.

Wie aus Figur 2 weiter zu entnehmen, sind die Anbindungserstreckungsrichtungen 8, 8' der Kontaktierungsanbindungen 5, 5' derart orientiert bzw. erstrecken sich letztere in der Anbindungserstreckungsrichtung 8, 8' derart, dass eine Kontaktierung des durch diese Kontaktierungsanbindung 5, 5' zu kontaktierenden Zellkontakts 6, 6' tangential zu einer Mittelachse 9 der jeweiligen den Zellkontakt 6, 6' aufweisenden Batteriezelle 3 erreicht ist.

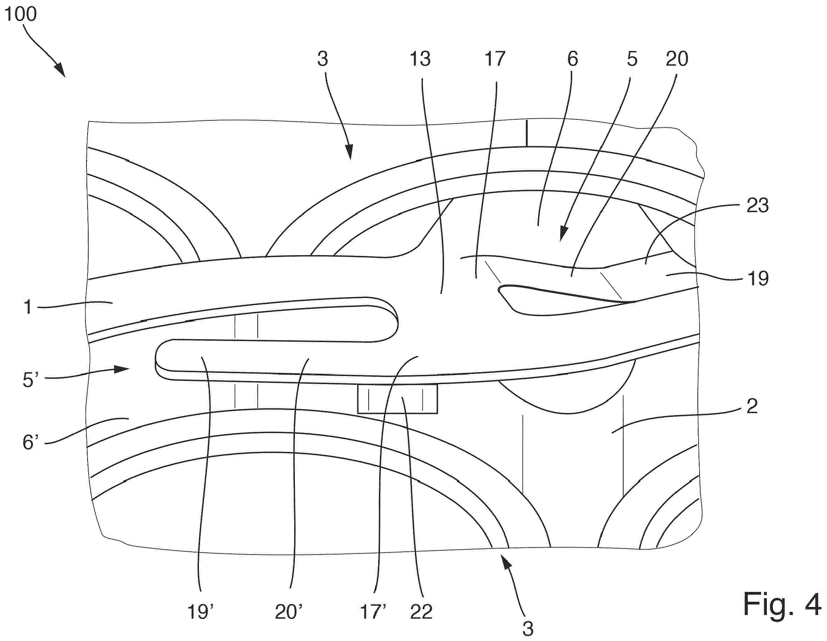

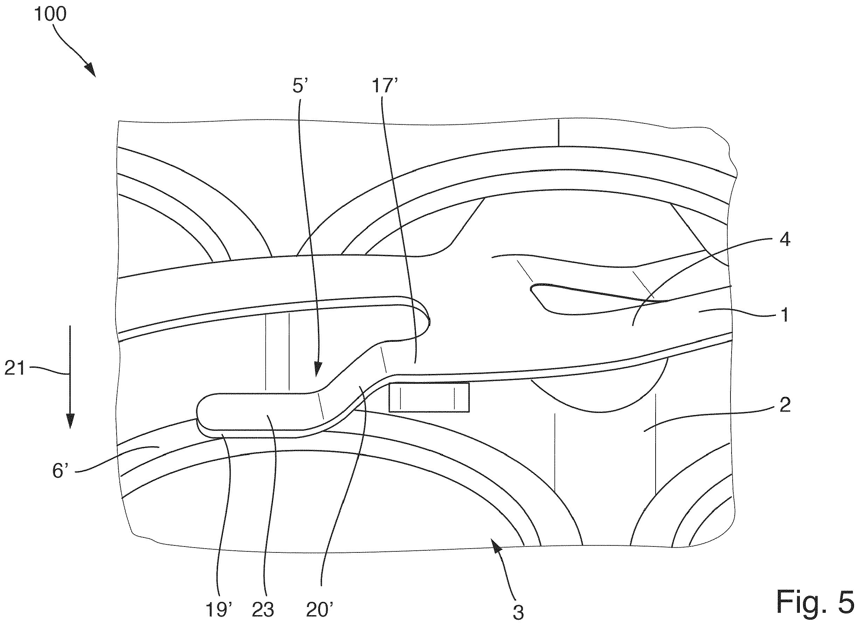

Figur 3 zeigt schematisch eine perspektivische Seitenansicht eines Teilbereichs der Batteriemodulanordnung 100 gemäß den Figuren 1 und 2. Beispielhaft sind zwei Niederhalter 110 und ein Schweißkopf 120 schematisch gezeigt. Die Niederhalter 110 halten hier beispielhaft die Stromschiene 1 nieder, drücken sie anders ausgedrückt auf den hier dargestellten Zellhalter 2. Dadurch ist die Stromschiene 1 bezogen auf den Zellhalter 2 und somit auf die darin gehaltenen Batteriezellen 3 in einer festen Position gehalten, so dass der Schweißkopf 120 eine Kontaktierungsanbindung 5, 5' mit einer der Batteriezellen 3 verschweißen kann. Dabei wird die aus flachem Material hergestellte Stromschiene 1, genauer deren jeweilige Kontaktierungsanbindung 5, 5', vom Schweißkopf 120 auf die Kontaktierungsfläche des Zellkontaktes 6, 6' der jeweiligen Batteriezelle 3 niedergedrückt und verschweißt, wie in Bezug auf die Figuren 4 und 5 nochmals dargestellt. Die Verschweißung ist ausreichend, um die Stromschiene 3 zu halten und um eine ausreichende Kontaktierung bereit zu stellen.

Die perspektivisch in der Figur hinten gelegenen ersten Kontaktierungsanbindungen 5 sind hier beispielhaft als bereits verschweißt dargestellt, die perspektivisch vorne liegenden zweiten Kontaktierungsanbindungen 5' sind hier beispielhaft in einer teils niedergedrückten Position dargestellt. Ein Schweißkopf 120 ist hier nur beispielhaft beim Niederdrücken einer zweiten Kontaktierungsanbindung 5' vor dem eigentlichen Verschweißen gezeigt. Es können beispielsweise eine oder mehrere Kontaktierungsanbindungen 5, 5' gleichzeitig niedergedrückt, respektive verschweißt werden.

in einem Zustand vor der Kontaktierung der zu kontaktierenden Zellkontakte 6, 6' ist die Stromschiene 1 als integrales, zweidimensionales Blechteil ausgebildet.

Die Kontaktierungsanbindungen 5, 5' weisen jeweils einen Kontaktierungsabschnitt 19 zum Kontaktieren eines Zellkontaktes 6, 6' und jeweils einen Verformungsabschnitt 20, 20' auf, wobei letztgenannter beim Herabdrücken des Kontaktierungsabschnitts 19 durch den Schweißkopf 120 in einer Dickenrichtung 21 des Grundkörpers 4 vom Höhenniveau (in Dickenrichtung 21) des Grundkörpers 4 auf ein davon unterschiedliches Höhenniveau (in Dickenrichtung 21) des zu kontaktierenden Zellkontaktes 6, 6' zum Kontaktieren dieses Zellkontaktes 6, 6' eine Verformung, bevorzugt eine elastische und/oder plastische Verformung, insbesondere Biegung, erfährt.

Um eine vorgesehene Verformung genau im dafür vorgesehenen Verformungsbereich 20, 20' zu erziehen, weist der Zellhalter 2 optional einen Stützbereich 22 auf, auf welchem sich der anzudrückende Kontaktierungsanbindung 5, 5' mit ihrem Wurzelbereich 17, 17' abstützt.

Figur 4 zeigt eine weitere perspektivische Seitenansicht der Batteriemodulanordnung gemäß den vorherigen Figuren. In dieser ist ein Anbindungsbereich 13 der Stromschiene 1 mit einer ersten Kontaktierungsanbindung 5 auf der ersten Seite 10 und einer zweiten Kontaktierungsanbindung 5' auf der zweiten Seite 11 gezeigt.

Die erste Kontaktierungsanbindung 5 liegt in einem bereits kontaktierten Zustand mit dem Zellkontakt 6 vor. Entsprechend ist der Schweißpunkt 23 zu erkennen.

Die zweite Kontaktierungsanbindung 5' liegt noch in ihrem zweidimensionalen Zustand vor, also, bevor sie in einem Fertigungsschritt durch den Schweißkopf 120 (siehe Figur 3) herabgedrückt und verschweißt wird. Entsprechend sind auch die Abschnitte 19' und 20' noch nicht als solche ausgebildet, sondern innerhalb der zweidimensionalen Lasche vorgesehen.

Figur 5 zeigt die perspektivische Seitenansicht aus Figur 4, wobei die zweite Kontaktierungsanbindung 5' aus der durch den Grundkörper 4 definierten Ebene via des Schweißkopfes 120 (siehe Figur 3) auf den Minuspol-Zellkontakt 6' angedrückt und verschweißt wurde. Entsprechend erstreckt sich der Verformungsabschnitt 20' in Dickenrichtung 21 vom Höhenniveau des Grundkörpers 4 auf das Höhenniveau des Zellkontaktes 6'. Der Kontaktierungsabschnitt 19' umfasst ferner entsprechend nun ebenfalls einen Schweißpunkt 23, so dass die Kontaktierungsanbindung 5' dauerhaft stromleitend mit dem Zellkontakt 6' verbunden ist.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Stromschiene
- 2: Zellhalter
- 3: Batteriezelle
- 4: Grundkörper
- 5, 5': Kontaktierungsanbindung
- 6, 6': Zellkontakt
- 7: Haupterstreckungsrichtung
- 8, 8': Anbindungserstreckungsrichtung
- 9: Mittelachse
- 10: erste Seite
- 11: zweite Seite
- 12: Querrichtung
- 13: Anbindungsbereich
- 14: Übergangsabschnitt
- 15, 15': Länge
- 16: Länge
- 17, 17': Wurzelabschnitt
- 18: Strompfad
- 19, 19': Kontaktierungsabschnitt
- 20, 20': Verformungsabschnitt
- 21: Dickenrichtung
- 22: Stützbereich
- 23: Schweißpunkt
- 100: Batteriemodulanordnung
- 110: Niederhalter
- 120: Schweißkopf

## Patentansprüche

1. Stromschiene (1) zum Kontaktieren von in einem Zellhalter (2) gehaltenen, bevorzugt zylindrischen, Batteriezellen (3) zur Ausbildung eines Batteriemoduls (100) einer Hochvolt-Batterie, bevorzugt einer Traktionsbatterie für ein Fahrzeug, umfassend einen sich in einer Haupterstreckungsrichtung (7) erstreckenden Grundkörper (4) und mindestens eine mit dem Grundkörper (4) einstückig ausgebildete Kontaktierungsanbindung (5, 5') zum Kontaktieren eines Zellkontaktes (6) einer der Batteriezellen (3),
**dadurch gekennzeichnet, dass**
die Kontaktierungsanbindung (5, 5') sich in einer Anbindungserstreckungsrichtung (8, 8') erstreckt, welche mit der Haupterstreckungsrichtung (7) einen Anbindungswinkel (a) zwischen 0° und kleiner 90° einschließt.

2. Stromschiene (1) gemäß Anspruch 1, **dadurch gekennzeichnet, dass** der Anbindungswinkel (a) kleiner 45°, bevorzugt kleiner 40°, besonders bevorzugt kleiner 35°, besonders bevorzugt kleiner 30° ist, wobei der Anbindungswinkel bevorzugt 25°, 20°, 15°, 10°, 5° oder 0° ist, und/oder, dass die Kontaktierungsanbindung sich in Form einer Lasche in Bezug in der Anbindungserstreckungsrichtung (8, 8') auf die Haupterstreckungsrichtung seitlich vom Grundkörper erstreckt.

3. Stromschiene (1) gemäß einem der vorstehenden Ansprüche, **dadurch gekennzeichnet, dass** die Stromschiene (1) eine erste Kontaktierungsanbindung (5) zum Kontaktieren eines Zellkontaktes (6) einer ersten Polarität und eine zweite Kontaktierungsanbindung (5) zum Kontaktieren eines Zellkontaktes (6') der zweiten Polarität umfasst, wobei bevorzugt bezogen auf die Haupterstreckungsrichtung (7) die erste Kontaktierungsanbindung (5) auf einer ersten Seite des Grundkörpers (4) angeordnet ist und die zweite Kontaktierungsanbindung (5') auf einer zweiten Seite des Grundkörpers (4) angeordnet ist, wobei bevorzugt die erste Kontaktierungsanbindung (5) ausgebildet ist, einen an einer Stirnseite einer Batteriezelle (3) zentral angeordneten Zellkontakt (6) erster Polarität zu kontaktieren und/oder die zweite Kontaktierungsanbindung (5') ausgebildet ist, einen an einer weiteren Batteriezelle (3) an deren Stirnseite im Umfangsbereich angeordneten Zellkontakt (6') zweiter Polarität zu kontaktieren.

4. Stromschiene (1) gemäß dem vorstehenden Anspruch, **dadurch gekennzeichnet, dass** sich die erste Kontaktierungsanbindung (5) bezogen auf die Haupterstreckungsrichtung (7) in einem ersten Richtungssinn vom Grundkörper (4) erstreckt und sich die zweite Kontaktierungsanbindung (5') bezogen auf die Haupterstreckungsrichtung (7) in einem dem erste Richtungssinn entgegen orientierten zweiten Richtungssinn vom Grundkörper (4) erstreckt.

5. Stromschiene (1) gemäß einem der vorstehenden Ansprüche, **dadurch gekennzeichnet, dass** bezogen auf eine zur Haupterstreckungsrichtung (7) senkrecht angeordnete Querrichtung (12) sich die erste Kontaktierungsanbindung (5) in einem ersten Richtungssinn vom Grundkörper (4) erstreckt und sich die zweite Kontaktierungsanbindung (5') bezogen auf die Haupterstreckungsrichtung (7) in zweiten, dem erste Richtungssinn entgegen orientierten Richtungssinn vom Grundkörper (4) erstreckt.

6. Stromschiene (1) gemäß einem der vorstehenden Ansprüche, **dadurch gekennzeichnet, dass** bezogen auf die Haupterstreckungsrichtung (7) ein Wurzelabschnitt (17) der ersten Kontaktierungsanbindung (5), von welchem aus sich die erste Kontaktierungsanbindung (5) vom Grundkörper (4) erstreckt, und ein Wurzelabschnitt (17') der zweiten Kontaktierungsanbindung (5'), von welchem aus sich die zweite Kontaktierungsanbindung (5') vom Grundkörper (4) erstreckt, im Wesentlichen auf der gleichen Höhe angeordnet sind.

7. Stromschiene (1) gemäß einem der vorstehenden Ansprüche, **dadurch gekennzeichnet, dass** in einem Zustand vor der Kontaktierung der zu kontaktierenden Zellkontakte (6, 6') der Grundkörper (4) und die mindestens eine Kontaktierungsanbindung (5, 5') als integrales, zweidimensionales Blechteil ausgebildet sind.

8. Stromschiene (1) gemäß einem der vorstehenden Ansprüche, **dadurch gekennzeichnet, dass** die mindestens eine Kontaktierungsanbindung (5, 5') einen Kontaktierungsabschnitt (19, 19') zum Kontaktieren eines Zellkontaktes (6, 6') aufweist und einen Verformungsabschnitt (20, 20') aufweist, via welchem bei einem Herabdrücken des Kontaktierungsabschnitts (19. 19') in einer Dickenrichtung (21) des Grundkörpers (4) vom Höhenniveau des Grundkörpers (4) auf ein davon unterschiedliches Höhenniveau des zu kontaktierenden Zellkontaktes (6, 6') zum Kontaktieren des Zellkontaktes (6, 6') eine Verformung, bevorzugt eine elastische und/oder plastische Verformung, bevorzugt eine Biegung, aufnehmbar ist.

9. Stromschiene (1) gemäß einem der Ansprüche 3 bis 8, **dadurch gekennzeichnet, dass** der Grundkörper (4) zwischen zwei Anbindungsbereichen (13), von welchen sich jeweils zumindest eine Kontaktierungsanbindung (5, 5') erstreckt, eine S-Schlag-förmigen Übergangsabschnitt (14) umfasst, wobei bevorzugt die Anbindungsbereiche (13) eine vorgegebene Breite quer zur Haupterstreckungsrichtung (7) aufweisen und der Übergangsabschnitt (14) eine Breite quer zur aufweist, die kleiner ist als die Breite der Anbindungsbereiche (13), wobei bevorzugt der Übergangsabschnitt (14) eine Länge in Haupterstreckungsrichtung (7) aufweist, die größer ist als die Länge zweier Kontaktierungsanbindungen (5, 5') in Haupterstreckungsrichtung (7).

10. Batteriemodulanordnung (100) zum Ausbilden einer Hochvolt-Batterie, bevorzugt einer Traktionsbatterie für ein Fahrzeug, umfassend einen Zellhalter (2), eine Vielzahl von im Zellhalter (2) gehaltenen Batteriezellen (3) und eine Stromschiene (1) gemäß einem der vorstehenden Ansprüche.

11. Verfahren (40) zum Verbinden einer Stromschiene (1) mit einem Zellkontakt (6, 6') einer Batteriezelle (3), umfassend
das Zusammenführen eines Zellhalters (2) zum Halten von Batteriezellen (3) in einem Batteriemodul (100) mit einer Stromschiene (1) gemäß einem der vorstehenden Ansprüche;
Niederhalten der Stromschiene (1) mit mindestens einem Niederhalter (110);
Andrücken einer Kontaktierungsanbindung (5,5') der Stromschiene (1) zum Kontaktieren einer im Zellhalter (2) gehaltenen Batteriezelle (3); und
Verschweißen der Kontaktierungsanbindung (5, 5')) mit der Batteriezelle (3).

12. Verfahren gemäß dem vorstehenden Anspruch, **dadurch gekennzeichnet, dass** beim Schritt des Andrückens ein Kontaktierungsabschnitt (19, 19') der Kontaktierungsanbindung (5, 5') aus einer durch einen Grundkörper (4) der Stromschiene (1) definierten Ebene auf den zu kontaktierenden Zellkontakt (6, 6') gedrückt wird, wobei bevorzugt ein Verformungsabschnitt (20, 20') der Kontaktierungsanbindung (5, 5') eine elastische und/oder plastische Verformung erfährt.

13. Verfahren nach Anspruch 11 oder 12, **dadurch gekennzeichnet, dass** das Andrücken der Kontaktierungsanbindung (5, 5') auf die Batteriezelle (3) mittels eines Schweißkopfes (120) erfolgt.
